(19) Europäisches Patentamt
European Patent Office
Office européen des brevets

(11) Veröffentlichungsnummer: **0 238 954 B1**

(12) # EUROPÄISCHE PATENTSCHRIFT

(45) Veröffentlichungstag der Patentschrift: **26.06.91**

(51) Int. Cl.5: **C07F 9/30**, C07F 9/32, C07K 5/08

(21) Anmeldenummer: **87103720.6**

(22) Anmeldetag: **14.03.87**

(54) **Verfahren zur Herstellung von L-Phosphinothricin(derivaten) sowie ihrer Alkylester.**

(30) Priorität: **22.03.86 DE 3609818**

(43) Veröffentlichungstag der Anmeldung:
**30.09.87 Patentblatt 87/40**

(45) Bekanntmachung des Hinweises auf die Patenterteilung:
**26.06.91 Patentblatt 91/26**

(84) Benannte Vertragsstaaten:
**AT BE CH DE ES FR GB IT LI NL**

(56) Entgegenhaltungen:
**EP-A- 0 127 429**

(73) Patentinhaber: **HOECHST AKTIENGESELLSCHAFT**
**Postfach 80 03 20**
**W-6230 Frankfurt am Main 80(DE)**

(72) Erfinder: **Zeiss, Hans-Joachim, Dr.**
**Hauptstrasse 127**
**W-6231 Sulzbach(DE)**

EP 0 238 954 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die vorliegende Erfindung betrifft ein Verfahren zur Herstellung von L-Homoalanin-4-yl(methyl)-phosphinsäure sowie ihrer Derivate der allgemeinen Formel I

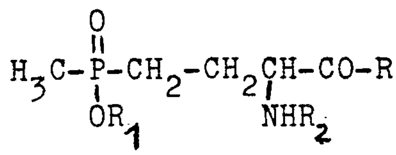

I

worin

- R Hydroxy, $(C_1-C_6)$Alkoxy, Ala-Ala(OH) oder Ala-Leu(OH),
- $R_1$ Wasserstoff oder $(C_1-C_6)$-Alkyl,
- $R_2$ Wasserstoff, einen Acyl-, Alkoxycarbonyl- oder Aryloxycarbonylrest

bedeuten, sowie von deren Salze mit anorganischen oder organischen Säuren oder Basen.

L-Homoalanin-4-yl(methyl)phosphinsäure, im folgenden L-Phosphinothricin oder kurz L-Ptc genannt, ihre Ester sowie ihre Salze mit organischen oder anorganischen Säuren oder Basen sind, wie in der DE-OS 28 56 260 beschrieben die wirksamen Enantiomeren der in der DE-OS 27 17 440 beschriebenen, herbizid wirksamen Racemate. Laut DE-OS 28 56 260 ist die herbizide Wirkung von L-Ptc gegen zahlreiche mono- und dikotyle, einjährige und mehrjährige Unkräuter doppelt so groß wie die des Racemats. Durch Verwendung von reinem L-Ptc anstelle des Racemats kann daher die Aufwandmenge des Herbizids erheblich reduziert werden, wodurch auch eventuelle unerwünschte Nebenwirkungen entsprechend verringert werden.

Der breiten Anwendung von L-Ptc standen bisher jedoch die Schwierigkeiten bei seiner Herstellung entgegen.

Zwar werden in der JA-OS 73-85538 und JA-OS 74-31890 die saure bzw. enzymatische Spaltung des L-Ptc enthaltenden Antiobiotikums SF-1293 beschrieben, jedoch ist die Herstellung des letzteren auf fermentativem Wege, wie sie z.B. in der DE-OS 22 36 599 beschrieben ist, sehr aufwendig.

Bekannt ist ferner die Spaltung von N-acylierten D,L-Ptc-Derivaten mit Hilfe von Acylasen, sei es a) mittels mikrobieller Acylasen gemäß DE-OS 29 39 269, sei es b) durch Einsatz von Penicillin-G-acylase gemäß DE-OS 30 48 612. Nachteilig sind bei dem Verfahren a) die geringe optische Reinheit des erhaltenen L-Ptc, bei b) die aufwendige Aufarbeitung der Rohprodukt über Ionenaustauscher sowie die relativ hohen Kosten der zur Acylierung benötigten Phenylessigsäure.

Das einzige bisher bekannt gewordene nicht-enzymatische Verfahren zur Herstellung von L-Ptc, das in der EP-OS 127 429 beschrieben wird, benutzt ein chirales, nichtracemisches Imin als Ausgangsmaterial, um in einem Alkylierungsschritt nach dem Prinzip der asymmetrischen Induktion (zur Erläuterung des Begriffs siehe E.L. Eliel: Stereochemie der Kohlenstoffverbindungen S. 23-30, Verlag Chemie, Weinheim 1966) das chirale Kohlenstoffatom im L-Ptc aufzubauen.

Nachteilig bei diesem Verfahren ist allerdings, daß der teure chirale Hilfsstoff, der zur Herstellung des chiralen Imins verwendet wird, in äquimolaren Mengen benötigt wird und nach der Reaktion nicht wieder zurückgewonnen werden kann.

Es bestand daher die Aufgabe, ein einfaches Verfahren zu entwickeln, das die Herstellung von L-Phosphinothricin in größeren Mengen und mit hoher optischer Reinheit erlaubt.

Gegenstand der Erfindung ist somit ein Verfahren zur Herstellung von L-Homoalanin-4-yl(methyl)-phosphinsäure sowie ihrer Derivate der allgemeinen Formel I, das dadurch gekennzeichnet ist, daß man 2,3-Dehydro-phosphinothricin-derivate der allgemeinen Formel II

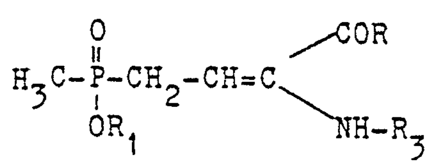

II

worin

- R und $R_1$ die gleiche Bedeutung wie in Formel I haben und

$R_3$ einen Acyl-, Alkoxy- oder Aryloxycarbonylrest bedeutet, in Gegenwart eines für die homogene asymmetrische Hydrierung geeigneten Komplexes der Formel III

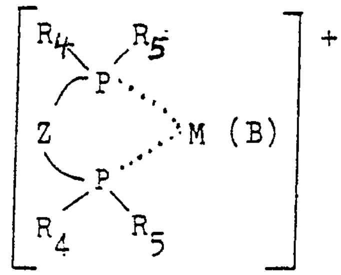

$A^{\ominus}$ III

hydriert und die erhaltenen Verbindungen gewünschtenfalls verseift, wobei in Formel III

- Z eine $C_2$-$C_4$-Paraffinkette, die einen oder mehrere Substituenten enthalten oder Teil eines Ringsystems sein kann;
- $R_4$ und $R_5$ gleich oder verschieden sind und Phenyl oder substituiertes Phenyl,
- M Ruthenium, Rhodium oder Iridium und
- B ein mit M einen kationischen Koordinationsmetallkomplex bildendes Olefin oder Di-olefin bedeuten, mit der Maßgabe, daß mindestens eines der P-Atome und/oder der Rest Z chiral sein müssen, und
- $A^-$ ein Anionäquivalent ist.

Die Ausgangsstoffe II lassen sich analog EP-OS 30 424 auf einfache Weise aus 4-(Hydroxy-methylphosphinyl)-2-oxo-buttersäure und Carbonsäureamiden herstellen.

In Formel II stehen R bevorzugt für OH und $(C_1$-$C_6)$Alkoxy und $R_1$ bevorzugt für H und $(C_1$-$C_6)$-Alkyl. $R_3$ stellt einen beliebigen Acyl-, Alkoxy- oder Aryloxycarbonylrest dar. Aus praktischen Gründen sind die niederen Alkanoyl- (vorzugsweise Acetyl) und die Benzoylverbindung(en) am besten geeignet, doch ist die Natur des Restes $R_3$ für das Gelingen der Reaktion nicht kritisch.

Hydrierungen mit chiralen Katalysatoren sind zwar prinzipiell aus der Literatur bekannt, jedoch werden, wie z.B. in der DE-OS 24 56 937 beschrieben, immer nur dann hohe optische Ausbeuten erzielt, wenn der Substituent Q in den Ausgangsstoffen der allgemeinen Formel IV ein aromatischer, oder wie in J. Org. Chem. 46, 5086 (1981) beschrieben, ein aliphatischer Rest ohne funktionelle Gruppen ist.

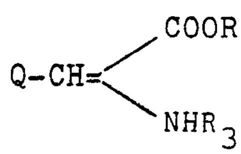

IV

Überraschend an dem erfindungsgemäßen Verfahren ist jedoch, daß man als Substrate für die Hydrierung auch solche Verbindungen der allgemeinen Formel IV einsetzen kann, die in ihrer Seitenkette Q eine Phosphinylgruppe tragen, welche zur koordinativen Bindung am zentralen Metallatom des Katalysators befähigt ist und damit den Katalysator vergiften würde.

Das erfindungsgemäße Verfahren wird in der Weise ausgeführt, daß man das 2,3-Dehydrophosphinothricinderivat der allgemeinen Formel II in einem geeigneten Lösungsmittel wie Wasser, Methanol, Ethanol, Benzol, Toluol oder Tetrahydrofuran, unter Inertgasatmosphäre, wobei unter inerten Gasen Stickstoff oder Argon verstanden werden, löst und anschließend eine Lösung des Katalysators im gleichen oder in einem anderen Lösungsmittel hinzufügt.

Die Herstellung des Katalysators III erfolgt in an sich bekannter Weise, indem man einen durch Umsetzung eines geeigneten Ruthenium-, Rhodium- oder Iridium-salzes mit einem (Di-)olefin erhaltenen Komplex der allgemeinen Formel

$[(B)M^{+}A^{\ominus}]_2$

entweder direkt oder auf dem Umweg über das Fluoborat mit einer Verbindung der Formel

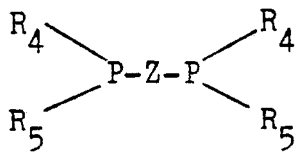

V

umsetzt. Diese Verfahren sind z.B. in JACS 93, 3089 (1971), J. Org. Chem. 44, 3741 (1979) sowie DE-AS 24 56 937 beschrieben.

Beispiele für geeignete Salze sind die Tribromide, Trichloride oder Sulfate von Ru, Rh oder Ir. Als (Di)-olefine eignen sich Äthylen, Propylen und Butadien und deren Homologe, insbesondere aber 1,5-Cyclooctadien und Norbornadien.

Ein Beispiel für den Rest Z ist der Dimethylenrest ($-CH_2-CH_2-$), der an einer oder an beiden $CH_2$-Gruppen auch weitere Substituenten, beispielsweise eine oder zwei $CH_3$-Gruppen oder den Cyclohexylrest tragen kann, wodurch das betreffende C-Atom zum Chiralitätszentrum wird. Derartige Verbindungen sind z.B. in JACS 100, 5491 (1978), Berichte 113, 2323 (1980) und J. Org. Chem. 45, 5187 (1980) beschrieben. Typische Vertreter sind z.B.:

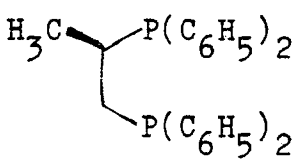

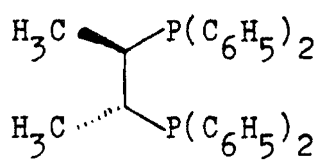

und

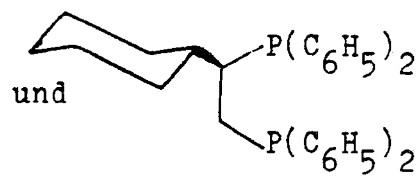

Va Vb Vc

Ist der Dimethylenrest unsubstituiert, so muß stattdessen mindestens eines der beiden P-Atome chiral sein, was dann der Fall ist, wenn die Reste $R_4$ und $R_5$ voneinander verschieden sind. Verbindungen dieser Art sind in der DE-AS 24 56 937 ausführlich beschrieben. Ein geeigneter Vertreter dieser Verbindungsklasse ist z.B.

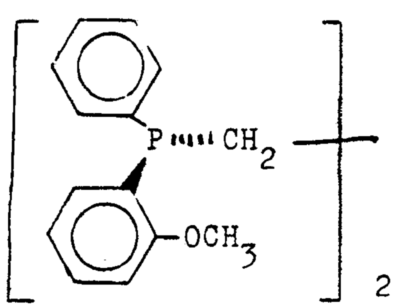

Vd

Verbindungen der Formel V, in denen der Dimethylenrest Z Teil eines heterocyclischen Systems ist, sind Gegenstand der EP-OS 151 282 und außerdem in Angew. Chem. 96, 425 (1984) beschrieben. Die darin genannten Verbindungen leiten sich vom Pyrrolidin ab und haben die allgemeine Formel

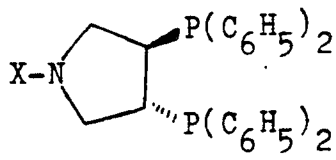

Ve

worin X ein Alkyl-, Aralkyl- oder Acylrest ist. Eine besonders geeignete Verbindung ist diejenige, in der X den Benzoylrest darstellt.

Ferner kann der Dimethylenrest Z auch Bestandteil eines isocyclischen Ringsystems sein. Als Beispiele seien genannt

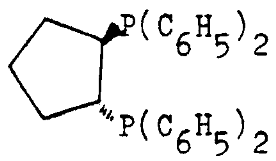

und

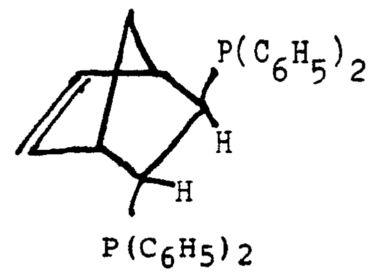

Vf

Vg

(Vf: J. Chem. Soc. Chem. Comm. 1983, 895;
Vg: Berichte 114, 1137 (1981))

Schließlich kann Z auch ein Tetramethylenrest ($-CH_2-CH_2-CH_2-CH_2-$) sein, der an einem oder mehreren C-Atomen (bevorzugt den beiden mittleren) durch eine Methoxygruppe substituiert ist. Besonders bevorzugt sind solche Verbindungen, bei denen die beiden mittleren C-Atome über eine O-Alkylen-O-Brücke zu einem 5- oder 6-Ring verknüpft sind. Verbindungen dieser Art sind in der DE-AS 21 61 200 beschrieben.

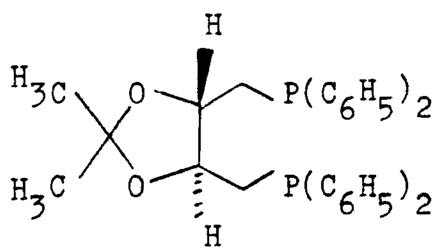

Vh

Das Anion A ergibt sich zwangsläufig aus dem weiter oben beschriebenen Herstellungsverfahren für den Komplex III. Bevorzugt ist A = $Cl^-$, $Br^-$, $ClO_4^-$, $BF_4^-$ oder $PF_6^-$.

Der Katalysator kann entweder isoliert oder in situ für die Hydrierung von II eingesetzt werden.

Nach der Zugabe des Katalysators zur Substratlösung wird Wasserstoff aufgedrückt. Man hydriert bei Drucken von 0,5 - 200 bar, bevorzugt jedoch bei 1 - 70 bar. Die Reaktionstemperatur beträgt -10 bis 120 °C, bevorzugt jedoch 5 bis 80 °C.

Das Molverhältnis von Katalysator (III) und Substrat (II) liegt im Bereich zwischen 1 : 10 und 1 :100000, bevorzugt jedoch im Bereich zwischen 1 : 50 und 1 : 50000.

Nach Aufnahme der berechneten Wasserstoffmenge wird das Reaktionsgefäß entspannt und der Katalysator auf bekannte Weise, z.B. durch Einrühren eines Kationenaustauschers, entfernt.

Die entstandenen N-Acyl- bzw. Alkoxy(Phenoxy)carbonylderivate können durch saure Hydrolyse in die Aminhydrochloride ($R_2$ = H) und diese wiederum, wie z.B. in der DE-OS 30 48 612 beschrieben, in die freien Amine überführt werden. Im Falle von R = OH und $R_1$ = H erhält man so das L-Ptc in mindestens 85 %iger optischer Ausbeute, d.h. mindestens 92 %.

Die nachfolgenden Beispiele sollen das Verfahren näher erläutern, ohne daß damit eine Einschränkung beabsichtigt ist.

## Beispiel 1

### L-Homoalanin-4-yl(methyl)phosphinsäure

a) 18,0 g (0,1 mol) 4-(Hydroxy-methylphosphinyl)-2-oxobuttersäure (hergestellt nach EP-OS 30 424) und 11,8 g (0,2 mol) Acetamid werden in 50 ml Eisessig suspendiert und 4 Stunden bei Raumtemperatur gerührt. Dann werden 100 ml Toluol und 1 Kristall Toluolsulfonsäure hinzugefügt und die Reaktionsmischung 5 Stunden am Wasserabscheider erhitzt. Das Lösungsmittel wird im Vakuum vollständig

abdestilliert und der Rückstand durch Aufnehmen in Eisessig/Toluol zur Kristallisation gebracht. Nach Umkristallisieren aus Eisessig/Aceton erhält man 13,1 g (59 % der Theorie) 2-Acetamido-4-(hydroxy-methylphosphinyl)-2-butensäure als weißen Feststoff vom Fp. 186 - 189° C (Zers.).

b) 0.0087 g (0,019 mmol) Chlor-norbornadien-rhodium(I)-dimer und 0,022 g (0,053 mmol) der Verbindung Va werden unter Argonatmosphäre in 5 ml Methanol gelöst. Die erhaltene Katalysatorlösung wird unter Argon zu einer Lösung von 2,21 g (0,01 mol) 2-Acetamido-4-(hydroxy-methylphosphinyl)-2-butensäure in 45 ml Methanol gegeben. Das Reaktionsgefäß wird evakuiert, dann wird bei einem Druck von 3,0 bar hydriert. Nach 44 Stunden Reaktionszeit wird das Reaktionsgefäß entspannt, die Reaktionsmischung eingeengt, der Rückstand in Wasser aufgenommen und der ausgefallene Katalysator abgetrennt. Durch Zugabe einer äquivalenten Menge konz. Salzsäure zum Filtrat wird eine 6-N salzsaure Lösung hergestellt, die 12 Stunden am Rückfluß gekocht wird. Nach des Einengen dieser Lösung erhält man 2,0 g (91,9 % der Theorie) L-Homoalanin-4-yl(methyl)phophinsäurehydrochlorid als weißen Feststoff, der durch Umkristallisation aus einem Ethanol/Wasser-Gemisch gereinigt wird.

Fp. 194 - 196° C (Zers.); $[\alpha]_D^{22}$ = 20,8° (c= 2,47 in 1 N HCl)

c) 0,33 g (0,0015 mol) L-Homoalanin-4-yl(methyl)phosphinsäurehydrochlorid werden in 15 ml Ethanol/Wasser gelöst und mit 0,3 g (0,005 mol) Propenoxid versetzt. Nach eintägigem Stehen bei Raumtemperatur erhält man 0,22 g (80,1 % der Theorie) L-Homoalanin-4-yl(methyl)phosphinsäure als weißen Feststoff vom Fp. 212 - 214° C (Zers.); $[\alpha]_D^{21}$ = 14,7° (c= 0,984 in $H_2O$)

Dies entspricht einer optischen Ausbeute von mindestens 86,0 % bezogen auf $[\alpha]_D^{23}$ = 17,0° (c= 1 in 1 $H_2O$) für optisch reine L-Homoalanin-4-yl(methyl)phosphinsäure (Sci. Reports of Meiji Seika Kaisha 13, 42 (1973)).

## Beispiel 2

### L-Homoalanin-4-yl(methyl)phosphinsäure-hydrochlorid

a) 2,21 g (0,01 mol) 2-Acetamido-4-(hydroxy-methylphosphinyl)-2-butensäure (Beispiel 1a) werden in 60 ml Methanol gelöst. Zu dieser Lösung wird unter Argon eine Lösung von 0,025 g (0,036 mmol) Norbornadien-[R-(+)-1,2-bis(diphenylphosphino)propan]rhodium-tetrafluo-borat (hergestellt nach JACS 100, 5491 (1978)) in 10 ml Methanol gegeben. Das Reaktionsgefäß wird auf 45° C erwärmt, dann wird evakuiert und anschließend bei einem Druck von 1 bar hydriert. Nach 22 Stunden Reaktionszeit wird das Reaktionsgefäß entspannt und die Reaktionsmischung zur Entfernung des Katalysators mit 2 g saurem Ionenaustauscher ($H^+$-Form) versetzt. Nach 3 Stunden Rühren bei Raumtemperatur wird der Ionenaustauscher abgetrennt, die Reaktionsmischung eingeengt, der Rückstand in 6 N Salzsäure aufgenommen und 12 Stunden am Rückfluß gekocht. Nach dem Einengen dieser Lösung erhält man 2,05 g (94,2 % der Theorie) L-Homoalanin-4-yl(methyl)phosphinsäurehydrochlorid als weißen Feststoff.

Fp. 188 - 190° C (Zers.)

## Beispiel 3

### L-Homoalanin-4-yl(methyl)phosphinsäure-hydrochlorid

Eine unter Stickstoff hergestellte Lösung von 1,1 g (0,005 mol) 2-Acetamido-4-(hydroxy-methylphosphinyl)-2-butensäure (Beispiel 1a) und 10 mg (0,012 mmol) {(R,R)-P,P'-[N-Benzoylpyrrolidin-3,4-diyl]-bis-(diphenylphosphan)}-1,5-cyclooctadien-rhodium-tetrafluo-borat (hergestellt gemäß EP-OS 151 282) in 60 ml Methanol wird in einem Autoklaven bei einem Druck von 15 bar und einer Temperatur von 30° C unter Rühren hydriert. Nach 24 Stunden Reaktionszeit ist die Hydrierung beendet. Die Aufarbeitung erfolgt analog Beispiel 2.

Ausbeute an L-Homoalanin-4-yl(methyl)phosphinsäure-hydrochlorid: 1,04 g (96 % der Theorie).
$[\alpha]_D^{22}$ = 23,2° (c= 1 in 1 N HCl) entsprechend einer optischen Ausbeute von 90,0 %.

Bei Verwendung von Wasser als Lösungsmittel und Anwendung eines $H_2$-Drucks von 50 bar erhält man 1 g (92,3 % der Theorie) L-Homoalanin-4-yl(methyl)phosphinsäure-hydrochlorid mit einem Drehwinkel $[\alpha]_D^{22}$ = 21,9° (c= 1 in 1 N HCl) entsprechend einer optischen Ausbeute von 85 %.

## Beispiel 4

### L-Homoalanin-4-yl(methyl) phosphinsäure

a) 4,9 g (0,022 mol) 2-Acetamido-4-(hydroxy-methyl-phosphinyl)-2-butensäure (Beispiel 1a) werden in einem Gemisch von 15 ml Essigsäure und 30 ml Orthoessigsäuretrimethylester suspendiert und 5 Minuten am Rückfluß erhitzt. Die Reaktionsmischung wird im Hochvakuum von allen flüchtigen Anteilen befreit, der Rückstand anschließend im Hochvakuum destilliert. Man erhält 4,8 g (88,4 % der Theorie) [-(3-Acetamido-3-methoxycarbonyl)-2-propen-1-yl]-(methyl)-phosphinsäuremethylester als farbloses Öl vom

Kp. 212-15/0,0013 mbar.

b) 0,0100 g (0,021 mmol) Chlor-norbornadien-rhodium(I)-dimer und 0,0227 g (0,050 mmol) (2R, 3R)-(-)-2,3-Bis(diphenylphosphino)-bicyclo[2,2,1]hept-5-en (Verbindung V g) werden unter Argonatmosphäre in 5 ml entgastem Methanol gelöst. Die erhaltene Katalysatorlösung wird 15 min bei Raumtemperatur gerührt und dann unter Argon zu einer Lösung von 3,9 g (0,016 mol) [(3-Acetamido-3-methoxycarbonyl)-2-propen-1-yl]-(methyl)-phosphinsäuremethylester in 50 ml Methanol gegeben. Das Reaktionsgefäß wird evakuiert, dann wird bei einem Druck von 2,5 bar hydriert. Nach 3 Stunden ist die Reaktion beendet. Nach Entspannen des Reaktionsgefäßes wird die Reaktionsmischung zur Entfernung des Katalysators mit 2 g saurem Ionenaustauscher ($H^+$-Form) versetzt und 3 Stunden bei Raumtemperatur gerührt. Der Ionenaustauscher wird abgetrennt und die Reaktionsmischung vollständig eingeengt. Es verbleiben 3,7 g (94,5 % der Theorie) [(3-Acetamido-3-methoxycarbonyl)-1-propyl]-(methyl)phosphinsäuremethylester als farbloses Öl.

$^1$H-NMR ($CDCl_3$): $\delta$ = 1,47 (d, J = 14 Hz, 3H), 1,60-2,30 (m, 4H), 2,03 (s, 3H), 3,70 (d, J = 10,7 Hz, 3H), 3,78 (s, 3H) 4,62 (m, 1H), 7,14 (m, breit, 1H)

c) 2,7 g (0,0108 mol) [(3-Acetamido-3-methoxycarbonyl)-1-propyl]-(methyl)phosphinsäuremethylester werden in 80 ml 6N Salzsäure gelöst und 15 Stunden am Rückfluß gekocht. Die Reaktionsmischung wird vollständig eingeengt und der verbleibende Rückstand durch Aufnehmen in Ethanol zur Kristallisation gebracht.

Man erhält 2,08 g (88,3 % der Theorie) L-Homoalanin-4-yl(methyl)phosphinsäure-hydrochlorid vom Fp. 194-96 °C (Zers.).

$[\alpha]_D^{22}$ = 21,4° (c= 2,02 in 1 N HCl)

d) 0,5 g (0,0023 mol) L-Homoalanin-4-yl(methyl)phosphinsäure-hydrochlorid werden analog Beispiel 1c) in die freie Aminosäure überführt.

Man erhält 0,4 g (96 % der Theorie) L-Homoalanin-4-yl(methyl)phosphinsäure als weißen Feststoff vom Fp. 210-212 °C (Zers.).

$[\alpha]_D^{22}$ = 15,0° (c= 1,00 in $H_2O$)

Dies entspricht einer optischen Ausbeute von mindestens 88,2 % bezogen auf $[\alpha]_D^{23}$ = 17,0° (c= 1 in $H_2O$) für optisch reine L-Homoalanin-4-yl(methyl)phosphinsäure (Sci. Reports of Meji Seika Kaisha 13, 42 (1973)).

## Ansprüche

1. Verfahren zur Herstellung von L-Homoalanin-4-yl(methyl)-phosphinsäure sowie ihrer Derivate der allgemeinen Formel I

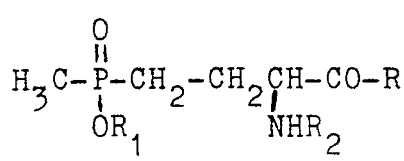

I

worin

R Hydroxy, ($C_1$-$C_6$)Alkoxy, Ala-Ala(OH) oder Ala-Leu(OH),

$R_1$ Wasserstoff oder ($C_1$-$C_6$)-Alkyl,

$R_2$ Wasserstoff, einen Acyl-, Alkoxycarbonyl- oder Aryloxycarbonylrest

bedeuten, sowie von deren Salze mit anorganischen oder organischen Säuren oder Basen, dadurch gekennzeichnet, daß man 2,3-Dehydro-phosphinothricinderivate der allgemeinen Formel II

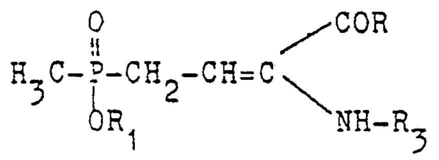

II

worin

R und $R_1$ die gleiche Bedeutung wie in Formel I haben und

$R_3$ einen Acyl-, Alkoxy- oder Aryloxycarbonylrest bedeutet, in Gegenwart eines für die homogene asymmetrische Hydrierung geeigneten Komplexes der Formel III

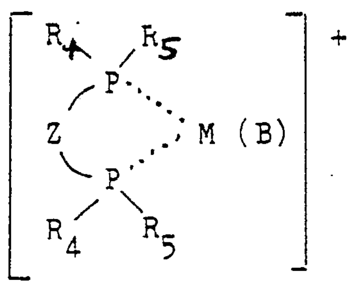

III

hydriert und die erhaltenen Verbindungen gewünschtenfalls verseift, wobei in Formel III

Z eine $C_2$-$C_4$-Paraffinkette, die einen oder mehrere Substituenten enthalten oder Teil eines Ringsystems sein kann;

$R_4$ und $R_5$ gleich oder verschieden sind und Phenyl oder substituiertes Phenyl,

M Ruthenium, Rhodium oder Iridium und

B ein mit M einen kationischen Koordinationsmetallkomplex bildendes Olefin oder Diolefin bedeuten, mit der Maßgabe, daß mindestens eines der P-Atome und/oder der Rest Z chiral sein müssen, und

$A^-$ ein Anionäquivalent ist.

2. Verfahren gemäß Anspruch 1, dadurch gekennzeichnet, daß in den Verbindungen der Formel II $R_3$ niedermolekulares Alkanoyl oder Benzoyl bedeutet.

3. Verfahren gemäß einem der Ansprüche 1 oder 2, dadurch gekennzeichnet, daß in den Verbindungen der Formel II R OH oder ($C_1$-$C_6$)Alkoxy und $R_1$ Wasserstoff oder ($C_1$-$C_6$)-Alkyl bedeuten.

## Claims

1. A process preparing L-homoalanin-4-yl(methyl)-phosphinic acid and also its derivatives of the formula I

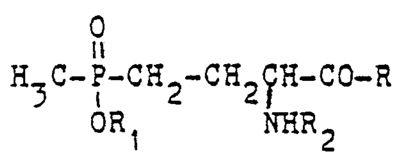

I

in which

R is hydroxy, ($C_1$-$C_6$)alkoxy, Ala-Ala(OH) or Ala-Leu(OH),

$R_1$ is hydrogen or ($C_1$-$C_6$)alkyl, and

$R_2$ is hydrogen, an acyl, alkoxycarbonyl or aryloxycarbonyl radical

and also of salts thereof with inorganic or organic acids or bases, which comprises hydrogenating 2,3-dehydro-phosphinothricine derivatives of the formula II

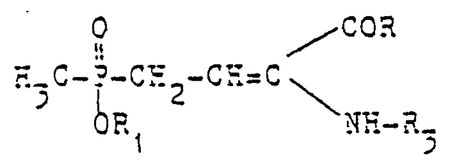

II

in which

R and $R_1$ have the same meaning as in formula I and

$R_3$ is an acyl, alkoxy or aryloxycarbonyl radical, in the presence of a complex of the formula III

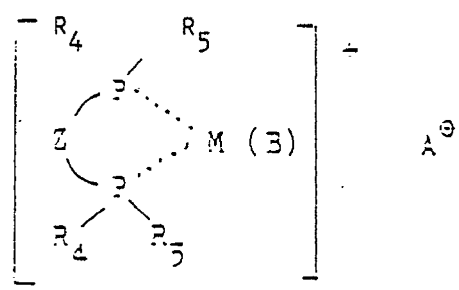

III

which is suitable for homogenous asymmetric hydrogenation, and the compounds obtained are optionally saponified, where, in formula III,

Z is a $C_2$-$C_4$-paraffin chain, which may contain one or more substituents or may be part of a ring system,

$R_4$ and $R_5$ are the same or different and are phenyl or substituted phenyl,

M is ruthenium, rhodium or iridium and

B is an olefin or diolefin forming a cationic metal coordination complex with M, with the proviso that at least one of the p atoms and/or the radical Z must be chiral, and

$A^-$ is an anion equivalent.

2. The process as claimed in claim 1, characterized in that, in the compounds of formula II, $R_3$ is low-molecular alkanoyl or benzoyl.

3. The process as claimed in one of the claims 1 or 2, characterized in that, in the compounds of formula II, R is OH or ($C_1$-$C_6$)alkoxy and $R_1$ is hydrogen or ($C_1$-$C_6$)alkyl.

## Revendications

1. Procédé pour préparer l'acide (L-homoalaninyl-4)-(méthyl)-phosphinique et des dérivés de celui-ci répondant à la formule générale I :

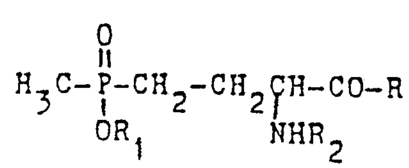

I

dans laquelle

R représente un radical hydroxy, alcoxy en ($C_1$-$C_6$), Ala-Ala(OH) ou Ala-Leu(OH),

$R_1$ représente l'hydrogène ou un alkyle en ($C_1$-$C_6$),

$R_2$ représente l'hydrogène ou un radical acyle, alcoxycarbonyle ou aryloxycarbonyle,

ainsi que les sels qu'ils forment avec des bases ou des acides minéraux ou organiques,

procédé caractérisé en ce qu'on hydrogène les dérivés de la déhydro-2,3 phosphinothricine répondant à la formule générale II :

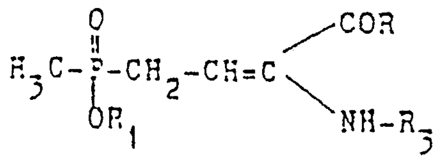

II

dans laquelle

R et $R_1$ ont les mêmes significations que dans la formule I et

$R_3$ représente un radical acyle, alcoxycarbonyle ou aryloxycarbonyle,

en présence d'un complexe approprié pour l'hydrogénation asymétrique homogène, en l'espèce un complexe répondant à la formule III :

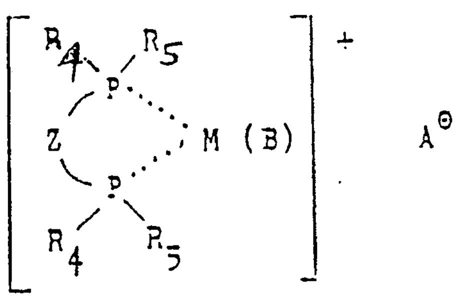

III

dans laquelle

Z représente une chaîne paraffinique en $C_2$-$C_4$ qui peut porter un ou plusieurs substituants ou qui peut faire partie d'un système cyclique,

$R_4$ et $R_5$ représentent chacun, indépendamment l'un de l'autre, un phényle ou un phényle substitué,

M représente le ruthénium, le rhodium ou l'iridium,

B représente une oléfine ou une di-odléfine formant, avec M, un complexe métallique de coordination cationique,

et

$A^-$ représente un équivalent d'anion, avec la condition qu'au moins un des atomes P et/ou le radical Z soit chiral.

2. Procédé selon la revendication 1, caractérisé en ce que, dans les composés de formule II, $R_3$ représente un alcanoyle à bas poids moléculaire ou un benzoyle.

3. Procédé selon l'une des revendications 1 et 2, caractérisé en ce que, dans les composés de formule II, R représente OH ou un alcoxy en $C_1$-$C_6$ et $R_1$ représente l'hydrogène ou un alkyle en $C_1$-$C_6$.